Europäisches Patentamt

European Patent Office

Office européen des brevets

(19)

(11) Veröffentlichungsnummer : **0 114 844**
**B1**

(12) **EUROPÄISCHE PATENTSCHRIFT**

(45) Veröffentlichungstag der Patentschrift :
06.05.87

(21) Anmeldenummer : 83902237.3

(22) Anmeldetag : 25.07.83

(86) Internationale Anmeldenummer :
PCT/CH 83/00090

(87) Internationale Veröffentlichungsnummer :
WO/8400512 (16.02.84 Gazette 84/05)

(51) Int. Cl.⁴ : **B 23 Q 37/00,** B 23 Q 5/04,
B 23 Q 5/12, B 25 F 3/00

(54) MEHRZWECK-DREHBEARBEITUNGSEINHEIT.

(30) Priorität : 04.08.82 CH 4687/82

(43) Veröffentlichungstag der Anmeldung :
08.08.84 Patentblatt 84/32

(45) Bekanntmachung des Hinweises auf die Patenterteilung : 06.05.87 Patentblatt 87/19

(84) Benannte Vertragsstaaten :
AT DE FR GB SE

(56) Entgegenhaltungen :
EP-A- 0 022 641
EP-A- 0 068 253
DE-A- 1 502 002
DE-C- 397 040
DE-C- 880 069
FR-A- 1 569 586
GB-A- 776 144
US-A- 2 083 858
US-A- 2 893 272
US-A- 3 724 561
US-A- 3 813 956
US-A- 4 105 361
Westinghouse Engineering, 19/4, S. 108-111 (7.1959)

(73) Patentinhaber : Suhner Inter Trade AG
Aarauerstrasse 36
CH-5200 Brugg (CH)

(72) Erfinder : Der Erfinder hat auf seine Nennung verzichtet

(74) Vertreter : Troesch, Hans Alfred, Dr. Ing. et al
Walchestrasse 19
CH-8035 Zürich (CH)

## Beschreibung

Die vorliegende Erfindung betrifft eine Mehrzweckbearbeitungseinheit, mit einem drehend angetriebenen Spindelteil zum Führen eines Bearbeitungswerkzeugs beim gleichzeitigen Vorschub, welcher Spindelteil mit Antriebsmitteln, gegebenenfalls über mehrere auswechselbare zusammensteckbare Getriebeeinheiten verbunden ist.

Bohrvorschubspindeln sind in der Maschinen-, Möbel- und Holzindustrie bekannte Apparate und werden für die nachfolgend aufgeführten Operationen eingesetzt :

Bohren
Gewinden
Reiben
Ausdrehen
Fräsen (gegebenenfalls)

Bohrvorschubspindeln werden mit folgenden Antriebsarten betrieben (Rotation/Translation).

1 Electromotor/pneumatischer Vorschub
2 Druckluftmotor/pneumatischer Vorschub
3 biegsame Welle/pneumatischer Vorschub
4 Elektromotor/hydraulischer Vorschub

Die Antriebsarten 1-3 sind für gleiche Einsatzfälle anwendbar, d. h. gegeneinander austauschbar. Die Antriebsart 4 wird hauptsächlich für grosse und schwere Bearbeitungen verwendet.

Die Vor- und Nachteile der verschiedenen Antriebsarten können etwa wie folgt umrissen werden :

Elektromotor/pneumatischer Vorschub ist die am weitesten verbreitete Antriebsart. Die Baubreite der Einheit wird massgeblich durch den Elektromotor bestimmt ; die einzelnen Einheiten sind relativ schwer. Die Vorschubkraft ist durch die Kolbenfläche des Pneumatikzylinders beschränkt.

Die Kombination Druckluftmotor/pneumatischer Vorschub lässt kompakte Bauformen zu. Auch sind Ausführungen mit direkt aufgebauten Einzelauslösungen bekannt. Die hohen Energiekosten für den Rotationsbetrieb (Druckluft-Lamellenmotor) machen diese Variante aber immer uninteressanter (Energiebewusstsein).

Die Drehmaschine mit biegsamer Welle und pneumatischem Vorschub erlaubt kompakt bauende Spindeln herzustellen. Es sind Konstruktionen bekannt, die mit einem zentralen Antriebsmotor bis zu acht Bohrvorschubspindeln antreiben. Für Anlagen mit bis zu drei Spindeln ist sie zu teuer, da der Antriebskostenanteil auf zu wenige Spindeln verteilt werden kann. Im übrigen handelt es sich um ein wirtschaftliches System.

Es ist zwar eine Mehrzweckbearbeitungseinheit mit Spindelvorschub der oben aufgeführten Art bekannt geworden (US-A-2 893 272), bei welcher Mittel vorgesehen sind, um den Spindelantrieb über auswechselbare zusammensteckbare Getriebeeinheiten ausgehend von einem Antriebsmotor vorzunehmen. Es handelt sich dabei aber um eine portable Maschine, d. h. um ein Handmodell. Deren Gehäuse ist als solches in sich abgeschlossen. Es dient sowohl der Aufnahme des Antriebs als auch der Steuerung.

Die Grundkonzeption dieser Maschine eignet sich nicht zum einfachen Umbau. Deren Anpassung an die jeweiligen Umstände ist mühsam Zerlegen der Maschine, spezielle, teure unterschiedliche Einsätze, genaue Platzgebundenheit und ein Platzgedränge, Spezialistenarbeit betreffend Montage, d. h. Eingriff der Zahnkränze etc. Dies ist keine Konstruktion für eine Bausatz-Auswechsel-Ausführung.

Die vorliegende Erfindung bezweckt die Schaffung einer Lösungsmöglichkeit für die Ausgestaltung derartiger Bearbeitungseinheiten, bei welchen auch einzelne Spindeln wirtschaftlich optimal betrieben werden können und welche auf einfache Weise einen Wechsel von einer Betriebsgrösse zu einer andern erlaubt.

Die erfindungsgemässe Mehrzweckbearbeitungseinheit der oben aufgeführten Art ist gekennzeichnet durch

eine Spindeleinheit, die den angetriebenen Spindelteil sowie eine beliebige Anzahl von einem Getriebesatz bildenden, gleichförmigen koaxial zusammensteckbaren Getriebeeinheiten mit festvorgegebenem Uebersetzungsverhältnis umfasst, derart, dass durch Auswahl einer entsprechenden Kombination von zusammengesteckten Getriebeeinheiten eine Grobeinstellung der Spindeldrehzahl vorgenommen wird, wobei die Steckverbindung zwischen den Getriebeeinheiten dem Antreibsanschluss des Spindelteils entspricht, und den Antriebsanschluss der jeweiligen Spindeleinheit bestimmt,

eine Antriebseinheit, die die Antriebsmittel sowie eine von diesen angetriebene Riemenübertragung umfasst, deren Abtriebsanschluss dem Antriebsanschluss der Spindeleinheit entspricht und deren Riemenscheiben derart austauschbar sind, dass eine Unterteilung des Spindeldrehzahlenbereichs innerhalb der jeweiligen Grobeinstellung bewerkstelligt wird, wobei der Abtriebsanschluss der Antriebseinheit und der Antriebsanschluss der Spindeleinheit entweder unmittelbar oder über eine mit entsprechenden Anschlusskupplungen versehene biegsame Welle miteinander verbunden werden.

Ein Ausführungsbeispiel des Erfindungsgegenstandes wird anschliessend anhand einer Zeichnung erläutert.

Es zeigen :

Figur 1 in rein schematischer Darstellung die einzeln dargestellten Gruppen einer Mehrzweck-Bearbeitungseinheit,

Figur 2 eine Seitenansicht der Bearbeitungseinheit gemäss Fig. 1. mit geschnittenem Teil der Antriebsseite,

Figur 3 einen Meridianschnitt durch ein Getriebe des Getriebesatzes,

Figur 4 eine Vorderansicht des Getriebes gemäss Fig. 3,

Figur 5 einen Meridianschnitt durch eine Anschlusskupplung der Ausführung gemäss Fig. 1,

Figur 6 eine Vorderansicht der Kupplung gemäss Fig. 5,

Figur 7 einen Meridianschnitt durch das Antriebselement gemäss Fig. 1.

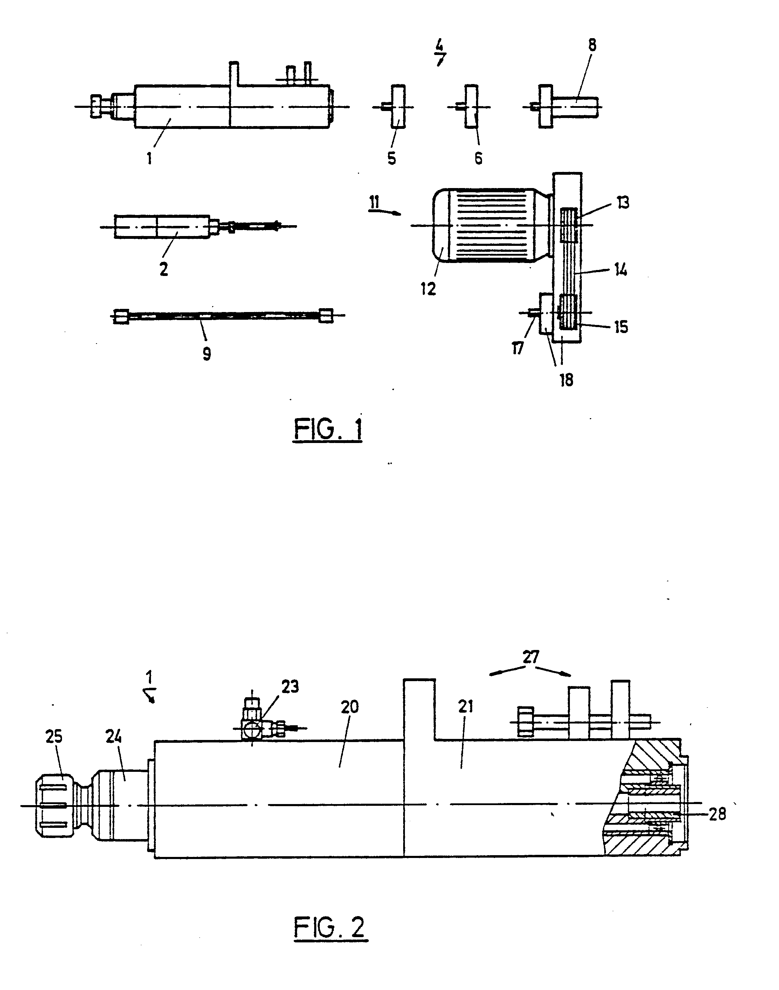

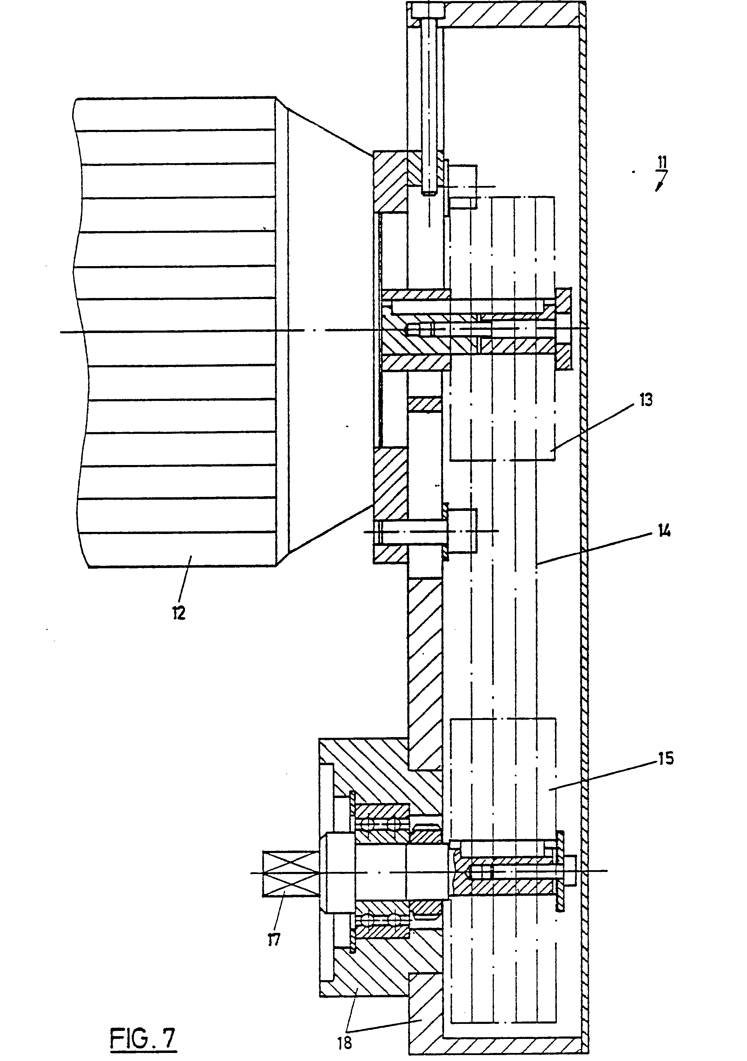

Die in Fig. 1 in ihre Baugruppen zerlegt dargestellte Mehrzweckbearbeitungseinheit weist einen Spindelkörper 1, auf welchem ein Bremszylinder 2 befestigt wird, auf sowie einen Getriebesatz 4 mit den dargestellten unterschiedlichen Getrieben 5 und 6, denen sich eine Anschlusskupplung 8 zur Aufnahme einer biegsamen Welle 9 anschliesst. Die Bearbeitungseinheit wird durch eine Antriebseinheit 11 mit einer Elektroeinheit 12 angetrieben, auf dessen Welle eine auswechselbare Keilriemenscheibe 13 sitzt. Diese treibt über einen Keilriemen 14 eine auswechselbare Riemenscheibe 15, die auf einem Steckwellenstummel 17 in einem Gehäuse 18 sitzt. Die Elektroeinheit ist mitsamt ihrer Keilriemenscheibe 13 im Gehäuse 18 mittels einer Schraube verschiebbar angeordnet, wie aus Fig. 7 ersichtlich.

Es ist bei dieser Ausführung grundsätzlich möglich, den Antrieb direkt, d. h. von der Antriebseinheit 11 ausgehend, über kein, ein oder mehrere Getriebe des Getriebesatzes 4 auf den Spindelkörper 1 zu übertragen, oder aber den Antrieb über die biegsame Welle 9 und die Anschlusskupplung 8 vorzusehen.

Der in Fig. 2 dargestellte Spindelkörper 1 ist an und für sich bekannt. Von dieser Einheit sind u. a. ein Spindelgehäuse 20 sowie ein mit diesem verbundenes Gehäuse 21 für die Aufnahme der Vorschubeinrichtung (Fig. 2) ersichtlich. Auf dem Spindelgehäuse 20 sitzen bekannterweise zwei Druckluftanschlüsse 23. Vorn aus dem Spindelgehäuse 20 ragt eine Pinole 24. Ferner ist eine Spannzange mit Spannmutter 25 dargestellt. Auf dem Gehäuse 21 befindet sich ein Aufbau 27 für das Anbringen und Betätigen des oelbetriebenen Bremszylinders 2 sowie in dessen hinterem Teil ein Mitnehmer 28 mit einem mittigen Vierkantloch.

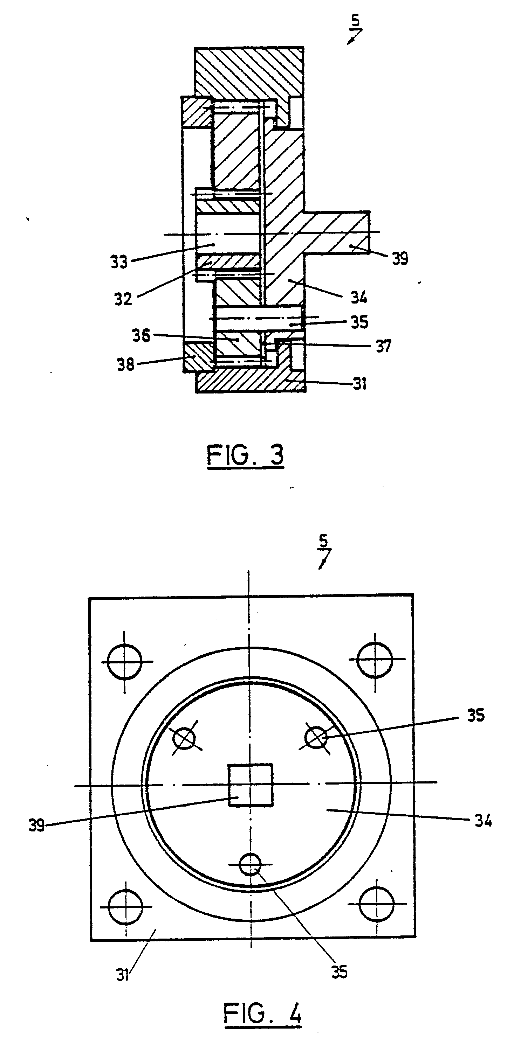

Das in den Fig. 3 und 4 dargestellte Getriebe 5 gehört zu einem Getriebesatz 4, welcher mehrere Getriebe enthält, um durch entsprechenden Einbau die gewünschten Drehzahlen (grossen Drehzahl-Stufensprung) des in der Spannzange 25 einzuspannenden Werkzeuges zu erreichen. Ein derartiges Getriebe weist ein Gehäuse 31 auf, mit einem mittigen Ritzel 32, das einen Vierkantdurchgang 33 hat. Ferner ist ein Planetenträger 34 vorgesehen, in welchem im vorliegenden Falle drei Bolzen 35 befestigt sind, welche zur Aufnahme je eines Planetenrades 36 dienen. Distanzscheiben 37 sorgen für den entsprechenden Abstand von Planetenrädern 36 und Planetenträger 34. Ein Zentrierring 38 schliesst das Gehäuse 31 nach dem Einbau der Getrieberäder ab. Der Planetenträger 34 ist an seiner Frontfläche mit einem Vierkantstummel 39 ausgerüstet, welcher das Kupplungselement darstellt.

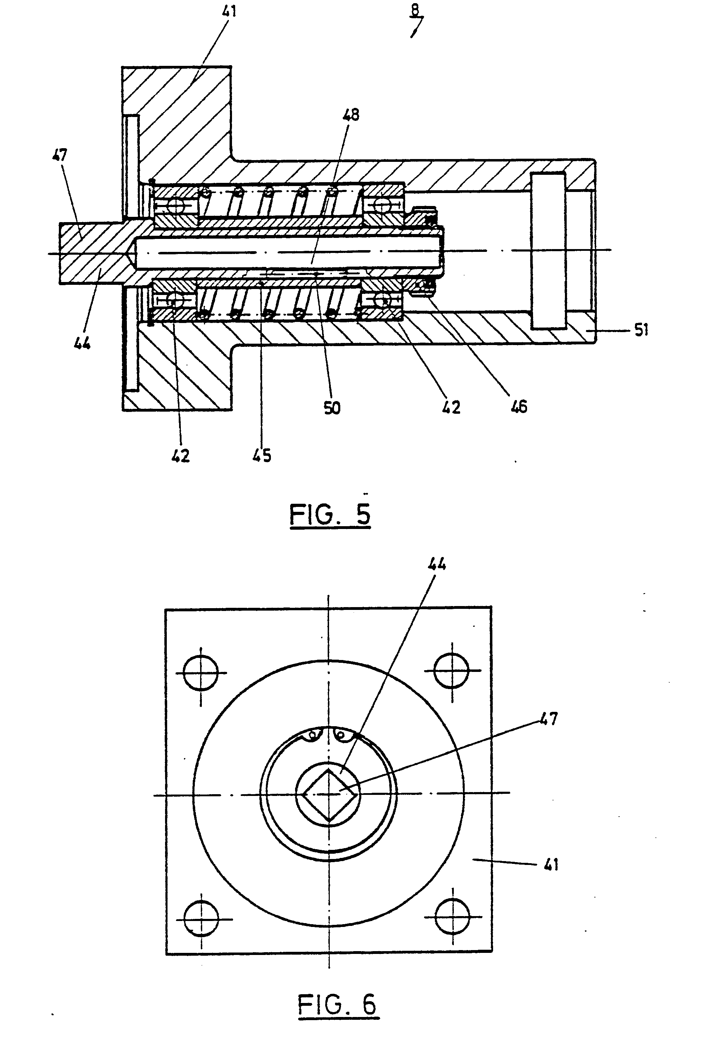

In den Fig. 5 und 6 ist die Anschlusskupplung 8 ersichtlich, mit einem Kupplungsgehäuse 41 sowie in dessen mittiger Bohrung angeordnete Kugellager 42, welche der Lagerung einer Antriebswelle 44 dienen. Die beiden Kugellager 42 sind durch eine Hülse 45 auf Distanz gehalten. Eine Sicherungsmutter 46 sichert die Lage der Antriebswelle 44. Diese ist auf der Stirnseite des Gehäuses 41 mit einem Vierkantstummel 47 als Kupplungselement versehen, wobei die Antriebswelle 44 eine mittige Bohrung 48 aufweist zur Aufnahme des einen Endes der biegsamen Welle 9. Da derartige biegsame Wellen ebenfalls zum Stande der Technik gehören, werden sie in der Folge nicht näher erläutert. Die Kraftübertragung biegsame Welle 9/Antriebswelle 44 geschieht über zwei Nadeln 50, die ins Innere der Bohrung 48 vorstehen und so als Mitnehmer dienen. Der Innendurchmesser des Kupplungshalses 51 des Gehäuses 41 dient als Führung für die biegsame Welle 9.

Der Spindelkörper 1 ist so ausgebildet, dass er ohne Demontage oder Ummontage als Basis für den biegsamen Wellenantrieb oder den direkten Elektroantrieb verwendbar ist. Der Bremszylinder 2 kann in den Spindelkörper 1 integriert werden. Die Eingangsdrehzahl ist dann gleich der Ausgangsdrehzahl. Es wird kein Getriebe 5, 6 in die Maschine eingebaut.

Die Anschlusskupplung 8 für die biegsame Welle 9 wird über einen Bund an den Spindelkörper 1 zentriert und mit Schrauben befestigt. Die Kraftübertragung geschieht über eine Steckkupplung, welche als Vierkantstummel 47 ausgebildet ist. Die Anschlusskupplung 8 hat auf der Gegenseite eine Anschlussmöglichkeit für die biegsame Welle 9 über eine Gleitkupplung mit den Mitnehmernadeln 50.

Fig. 7 zeigt in vergrössertem Massstab die in Fig. 1 dargestellte Antriebseinheit 11, welche grundsätzlich ebenfalls zum Stande der Technik gehört.

Die an und für sich bekannte Bauweise der Antriebseinheit 11 mit der Elektroeinheit 12 und dem Getriebekasten in geschlossener Ausführung enthält den Riemen 14 (Zahn-, Keil-, Poly-V-) und verschiedene Riemenscheiben 15 für Drehzahlabstufungen (kleiner Stufensprung). Der Anschluss ist so ausgelegt, dass er anstelle der Anschlusskupplung 8 an dem Spindelkörper 1 befestigt werden kann. Zur stufenweisen Reduktion (grosser Stufensprung) können ein oder mehrere fest zwischenmontierbare Getriebe 5, 6 des Getriebesatzes 4 verwendet werden. Die Antriebseinheit 11 kann bezüglich des Spindelkörpers 1 um jeweils 90° versetzt montiert werden.

Das Getriebe 5, 6, wird zur Untersetzung der Antriebsdrehzahl verwendet (grosser Stufensprung). Niedere Drehzahlen werden bei Gewindeschneid- und Reiboperationen benötigt. Es sind mehrere Getriebe hintereinander montiert, denkbar. Die Zentrierung und Befestigung erfolgt analog dem Anschluss der biegsamen Welle. Aus Kostengründen wird ein sinnvolle Getriebestufung festgelegt und evt. zwei gleichartige Getriebe hintereinander montiert.

Die Vorteile dieses Systems sind offensichtlich : Die Abdeckung des heute nicht wirtschaftlichen Bereiches von Anlagen mit Spindelanzahl (Antrieb biegsame Welle/pneumatischer Vorschub) unter vier ist sichergestellt.

Es ist eine beträchtliche Teilereduktion durch das Baukastensystem möglich. Mit wenigen Komponenten kann eine grosse Anzahl von sinnvollen Varianten hergestellt werden. Die Lagerhaltung an dezentralen Orten wird reduziert und vereinfacht.

**Patentanspruch**

Mehrzweckbearbeitungseinheit, mit einem drehend angetriebenen Spindelteil (1) zum Führen eines Bearbeitungswerkzeugs beim gleichzeitigen Vorschub, welcher Spindelteil mit Antriebsmitteln (12), gegebenenfalls über mehrere auswechselbare zusammensteckbare Getriebeeinheiten (5, 6) verbunden ist, gekennzeichnet durch

eine Spindeleinheit, die den angetriebenen Spindelteil (1) sowie eine beliebige Anzahl von einen Getriebesatz (4) bildenden, gleichförmigen koaxial zusammensteckbaren Getriebeeinheiten (5, 6) mit festvorgegebenem Uebersetzungsverhältnis umfasst, derart, dass durch Auswahl einer entsprechenden Kombination von zusammengesteckten Getriebeeinheiten eine Grobeinstellung der Spindeldrehzahl vorgenommen wird, wobei die Steckverbindung (33, 39) zwischen den Getriebeeinheiten dem Antriebsanschluss (28) des Spindelteils (1) entspricht, und den Antriebsanschluss (28, 33) der jeweiligen Spindeleinheit bestimmt,

eine Antriebseinheit (11), die die Antriebsmittel (12) sowie eine von diesen angetriebene Riemenübertragung (13, 14, 15) umfasst, deren Abtriebsanschluss (17) dem Antriebsanschluss (28, 33) der Spindeleinheit entspricht und deren Riemenscheiben (13, 15) derart austauschbar sind, dass eine Unterteilung des Spindeldrehzahlenbereichs innerhalb der jeweiligen Grobeinstellung bewerkstelligt wird, wobei der Abtriebsanschluss (17) der Antriebseinheit (11) und der Antriebsanschluss (28, 33) der Spindeleinheit entweder unmittelbar oder über eine mit entsprechenden Anschlusskupplungen (8) versehene biegsame Welle (9) miteinander verbunden werden.

**Claim**

A multi-purpose machining unit with a rotatably driven spindle portion (1) for guiding a machining tool during simultaneous advance, said spindle portion being coupled with drive means (12) which may comprise a number of interchangeable plugged-together transmission units (5, 6), characterised by :

a spindle unit comprising the driven spindle portion (1), together with any deried number of similarly-shaped coaxial transmission units (5, 6) with pre-determined transmission ratio and pluggable together to form a transmission line (4), wherein coarse setting of the spindle rotation speed is effected by selecting the appropriate combination of plugged-together transmission units and wherein the plug joint (33, 39) between the transmission units corresponds to the drive connection (28) for the spindle portion (1), and forms the drive connection (28, 33) for the spindle unit being operated,

a drive unit (11) comprising the motor source (12) and a belt transmission system (13, 14, 15) driven thereby and whose driven connection (17) forms the drive connection (28, 33) for the spindle unit, and whose pulleys (13, 15) can be interchanged to effect sub-division of the range of spindle rotation speeds within the coarse setting, wherein the driven connection (17) of the drive unit (11), and the drive connection (28, 33) for the spindle unit are coupled together either directly or by means of a flexible shaft (9) provided with corresponding coupling devices (8).

**Revendication**

Unité d'usinage à fonctions multiples, comportant une broche (1) entraînée en rotation pour la commande d'un outil d'usinage avec avance simultanée, cette broche étant reliée à des moyens d'entraînement (12), le cas échéant par l'intermédiaire de plusieurs unités d'engrenages (5, 6) interchangeables et assemblables par emmanchement mutuel, caractérisé par

une unité d'usinage qui rassemble la broche (1) entraînée, ainsi qu'un nombre quelconque d'unités d'engrenages (5, 6) de même forme, pouvant être assemblées coaxialement pour emmanchement mutuel et formant un jeu d'engrenages (4), avec un rapport de démultiplication prédéterminé, de telle façon qu'en choisissant une combinaison convenable d'unités d'engrenages assemblées, on procède à un réglage grossier de la vitesse de rotation du porte-outil, la liaison par emmanchement (33, 39) entre les unités d'engrenages correspondant au raccord d'entraînement (28) de la broche (1), et définissant le raccord d'entraînement (28, 33) de l'unité d'usinage respectif,

un bloc-moteur (11) qui rassemble les moyens d'entraînement (12), ainsi qu'une transmission par courroie (13, 14, 15) entraînée par ceux-ci, dont le raccord (17) côté sortie correspond au raccord d'entraînement (28, 33) de l'unité d'usinage et dont les poulies (13, 15) peuvent être échangées pour que puisse être réalisée une subdivision de la plage des vitesses de rotation de la broche dans les limites du réglage grossier respectif, le raccord (17) côté sortie du blocmoteur (11) et le raccord d'entraînement (28, 33) de l'unité d'usinage étant reliés entre eux soit directement, soit par l'intermédiaire d'un arbre flexible (9) pourvu de raccords d'accouplement (8) adéquats.

$\frac{4}{7}$

FIG. 1

FIG. 2

FIG. 3

FIG. 4

2

FIG. 5

FIG. 6

3

FIG. 7